# EUROPEAN PATENT SPECIFICATION

(11) **EP 4 558 383 B1**
(45) Date of publication and mention of the grant of the patent: **05.11.2025**
(21) Application number: 23744172.0
(22) Date of filing: 24.07.2023
(51) Int. Cl.: B62J 1/02, B62K 19/36, B62J 1/08, B62K 19/08, B62K 25/28, B62K 25/08

(54) **BICYCLE FRAME WITH ADJUSTABLE SADDLE SUPPORTING FRAME**
FAHRRADRAHMEN MIT VERSTELLBAREM SATTELSTÜTZRAHMEN
CADRE DE BICYCLETTE À CADRE DE SUPPORT DE SELLE RÉGLABLE

(30) Priority: 22.07.2022 LU 502549
(43) Date of publication of application: 28.05.2025
(73) Proprietor: Sellen, Stephan, 66693 Wehingen (DE)
(72) Inventor: Sellen, Stephan, 66693 Wehingen (DE)
(74) Representative: Ipsilon Benelux
(86) International application number: PCT/EP2023/070396
(87) International publication number: WO 2024/018091

(56) References cited:
- EP-A2- 0 983 933
- DE-A1- 102020 115 401
- KR-B1- 101 599 637

## Description

### Technical Field

The invention is directed to the field of bicycles.

### Background Art

Prior art patent document published DE 102 53 575 B3 discloses a bicycle frame with a saddle supporting assembly that allows adjusting the position of the saddle. The saddle supporting assembly comprises a rigid subframe that is pivotally linked to the main frame of the bicycle and an adjustment rod comprising two opposed threads mutually engaged via a third connecting element, that allow a progressive and stable adjustment of the length of the adjustment rod. The adjustment of the saddle position is achieved in a progressive manner by rotation of the connecting element i.e., at standstill of the bicycle or even during ride of the bicycle. The adjustment does not however allow to move rapidly the saddle in a substantially lowered position, e.g. for a downhill ride.

Prior art patent document published DE 10 2006 046 847 A1 discloses a bicycle frame with a main frame provided with a front tube for bearing a steering column and a rear end for bearing a swing arm and pedals; and with a saddle support assembly pivotally mounted to the main frame so as to allow adjusting the saddle. The saddle support assembly comprises a telescopic saddle tube extending essentially upright from the pedal bearing, however in a pivoting manner adjacent the pedal bearing. The telescopic tube is also mechanically linked to a front portion of the main frame by a rod. The latter has a rear end pivotally linked to the telescopic saddle tube and a front end pivotally linked to a front portion of the main frame, adjacent the front tube bearing the steering column. Upon contraction or extension of the telescopic saddle tube, the saddle moves down or up, respectively, with a slight pivoting movement of the telescopic saddle tube to the front or the rear, respectively. The saddle supporting assembly is advantageous in that it slightly moves the saddle longitudinally while adjusting its height. It fails however to provide a substantially change of position of the saddle suitable for a downhill ride.

Prior art patent document published DE 43 35 460 A1 discloses also a bicycle frame with a saddle supporting assembly that allows to adjust the longitudinal position of the saddle in addition to adjusting its height. The height adjustment is by a classic telescopic tube whereas the longitudinal adjustment is by a special connection between the essentially upright saddle telescopic tube and the main frame. Similarly, this bicycle frame fails to provide a substantially change of position of the saddle suitable for a downhill ride.

Document KR101599637B1 shows a bicycle frame comprising a saddle.

### Summary of Invention

### Technical Problem

The invention has for technical problem to overcome at least one drawback of the above cited prior art. More specifically, the invention has for technical problem to provide a bicycle where the saddle can rapidly change substantially its position from a normal or raised position to a lowered position, also with an ergonomically better geometric change of position, e. g. particularly adapted for a downhill ride.

### Technical solution

The invention is directed to a bicycle frame comprising: a main frame comprising a front tube for bearing a steering column; and a rear end for bearing a swing arm; a saddle support assembly pivotally mounted to the main frame so as to allow adjusting the saddle; wherein the saddle support assembly comprises a subframe; a telescopic member extending from a front end of the subframe and pivotally linked to a front portion of the main frame; and a connecting rod pivotally linked to the subframe and to a rear portion of the main frame.

According to a preferred embodiment, the saddle support assembly is movable between a raised position where the telescopic member is an extended position and the connecting rod is in an upright position, and a lowered position where the telescopic member is in a retracted position and the connecting rod is in an inclined position.

According to a preferred embodiment, the connecting rod in the raised position is vertical or inclined by not more than 20° relative to the vertical.

According to a preferred embodiment, the telescopic member and the subframe delimit an oil chamber, said oil chamber having a volume that is reduced in the lowered position and increased in the raised position.

According to a preferred embodiment, the telescopic member comprises a piston slidingly received in a cylindrical cavity formed in the subframe, said piston and said cylindrical cavity delimiting the oil chamber.

According to a preferred embodiment, the telescopic member comprises an inner volume delimiting a gas chamber, said gas chamber comprising a freely sliding piston separating the gas chamber and the oil chamber.

According to a preferred embodiment, the telescopic member comprises a command rod extending longitudinally through the gas chamber, through the freely sliding piston until the piston and engaged with a valve on said piston.

According to a preferred embodiment, the subframe and the telescopic member are mechanically linked to each other via ball screw drive driven by an electric motor.

According to a preferred embodiment, the connecting rod is pivotally linked to the subframe at an intermediate portion between the front end and a rear end of said subframe.

According to a preferred embodiment, the subframe has a lateral profile that is V-shaped.

According to a preferred embodiment, the intermediate portion is adjacent an angular portion of the V-shaped profile.

According to a preferred embodiment, the connecting rod comprises, adjacent the pivoting linkage to the rear portion of the main frame, a pivoting linkage to a spring strut with shock absorber of the swing arm, so that adjusting the saddle adjusts also the swing arm relative to the main frame.

According to a preferred embodiment, the front tube is pivotally mounted on the main frame and mechanically linked to the telescopic member so that adjusting the saddle adjusts also the angle of the steering column relative to the main frame.

According to a preferred embodiment, the main frame comprises a beam to which the front tube is attached and comprising two spaced longitudinal symmetric plates assembled to each other by transversal spacers.

According to a preferred embodiment, at least one of the two spaced longitudinal symmetric plates comprises a recessed area with meanders and covered by a cover plate so as to form a cooling fluid channel through the meanders. The at least one recessed area is on external side of the corresponding longitudinal plate.

According to a preferred embodiment, the two spaced longitudinally symmetric plates form a volume between the recesses area(s), said volume being closed by one or more plates preferably being non-metallic. The volume is generally cuboid and configured for housing batteries of a drive electric motor.

### Advantages of the invention

The invention is particularly interesting in that it allows a rapid and easy lowering of the saddle while riding, in particular for a downhill ride. The movement can be initiated by actuating the command rod, e.g. by actuating a manual command on the handlebar. Such a manual command can comprise a lever or a push-button, mechanically connect to the command rod, preferably a front end thereof, via a Bowden cable.

### Brief description of the drawings

[Fig.1] is a perspective view of a bicycle, more particularly of a bicycle frame, according to the invention, where the saddle is a raised or normal position.
[Fig.2] corresponds to [Fig.1], where however the saddle is a lowered position.
[Fig.3] is a sectional view of the frame of the bicycle of [Fig.1], where the saddle is the raised or normal position.
[Fig.4] corresponds to [Fig.3], where however the saddle is the lowered position.
[Fig.5] is a perspective view of the upper and front portion of the bicycle of figures 1 and 2, showing the pivoting mounting of the front tube bearing a steering column.
[Fig.6] is a lateral view of the bicycle of [Fig.1], where the saddle is the raised or normal position.
[Fig.7] corresponds to [Fig.6], where however the saddle is the lowered position.
[Fig.8] is a detailed perspective view of the beam of the main frame of the bicycle frame of figures 1 to 7.

### Description of an embodiment

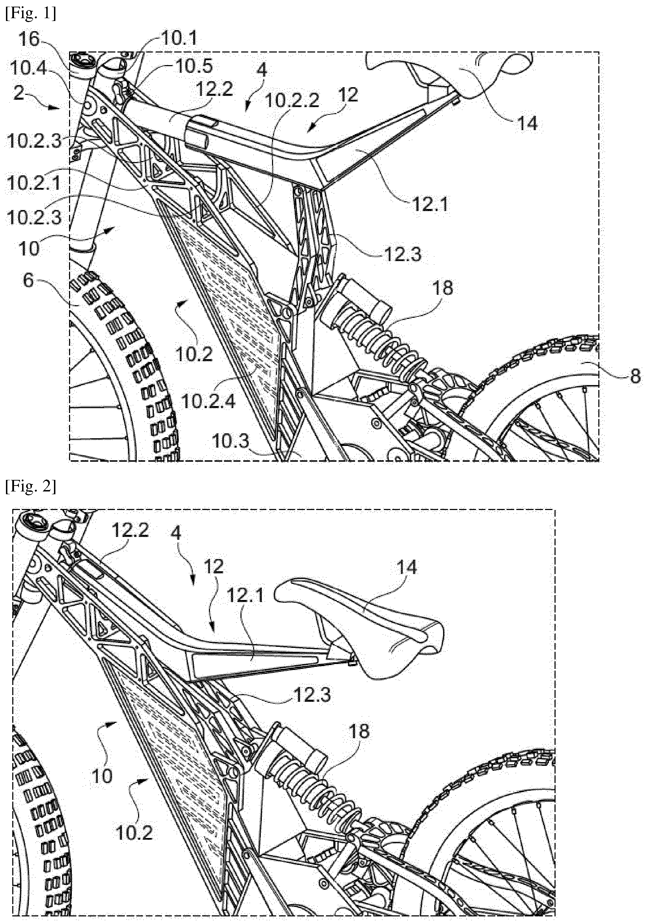

Figures 1 to 8 are various views of a bicycle and bicycle frame according to an embodiment of the invention.

Figures 1 and 2 are perspective views of the bicycle and bicycle frame in a raised position and a lowered position, respectively.

As this is apparent, the bicycle 2 comprises a bicycle frame 4, a front wheel 6 and a rear wheel 8, both attached to the bicycle frame 4. The bicycle frame 4 comprises essentially a main frame 10 and a saddle support assembly 12 attached to said main frame. The saddle support assembly 12 comprises a subframe 12.1 and a telescopic member 12.2 extending from a front end of the subframe 12.1 and pivotally linked to a front portion of the main frame 10; and a connecting rod 12.3 pivotally linked to the subframe 12.1 and to a rear portion of the main frame 10. The subframe 12.1 of the saddle support assembly 12 supports at a rear end thereof a saddle 14 of the bicycle 2. The saddle support assembly is movable between the raised position as in [Fig.1] and the lowered position as in [Fig.2].

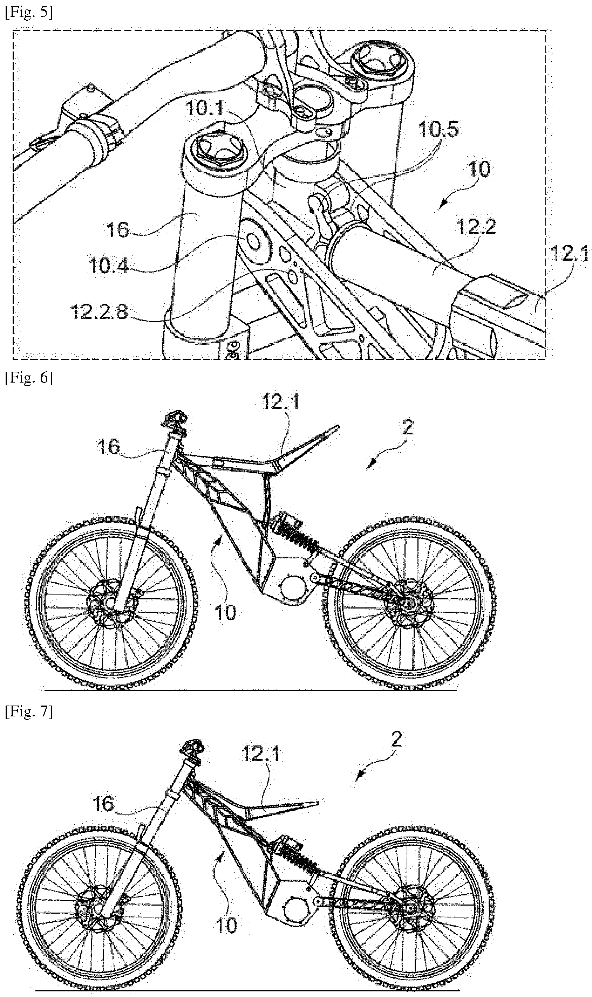

The main frame 10 comprises at its front end a front tube 10.1 bearing a steering column 16. The main frame 10 comprises a rear end supporting a pedal axis and a swing arm to which the rear wheel 8 is attached. The swing arm is not well visible in figures 1 and 2; it is more detailed in connection with figures 6 and 7.

As this is apparent the main frame 10 forms a beam 10.2 extending from the front end and close to the rear end thereof. That beam 10.2 is for instance formed of two longitudinally symmetric plates 10.2.1 and 10.2.2 assembled to each other by transversal spacers 10.2.3. The main frame 10 comprises also a rear part 10.3 assembled to the beam 10.2 and comprising the rear end of the main frame 10 supporting the crank set and an optional electric motor. As this is apparent the beam 10.2 by being formed of two plates 10.2.1 and 10.2.2 assembled to each other with a distance by means of the transversal spacers 10.2.3 provides a volume for housing batteries of the electric motor. Also, the two side plates 10.2.1 and 10.2.2 show external recessed areas 10.2.4 designed for receiving heat exchangers for the electric motor.

As this is also apparent in figures 1 and 2, a spring strut with shock absorber 18 is provided with one end pivotally attached to the swing arm and another end pivotally attached to the bicycle frame 4, in a preferred manner to the connecting rod 12.3 of the saddle support assembly 12, at some distance of the pivoting axis of the connecting rod 12.3 with the main frame 10. In an alternative and simpler configuration, the end of the spring strut with shock absorber can be pivotally attached directly to the main frame 10, preferably to the beam 10.2 thereof.

As this is further apparent in figures 1 and 2, the front tube 10.1 is pivotally mounted on the main frame 10, for instance on the beam 10.2, by means of the transversal pivoting axis 10.4. This axis is in practice formed by two pivots engaged on lateral opposed sides of the front tube 10.1 and extending through corresponding openings formed in the beam 10.2, more specifically in each of the two plates 10.2.1 and 10.2.2. The front tube 10.1 is further mechanically linked to the telescopic member 12.2 of the saddle support assembly, for instance via two link rods 10.5. The pivot attachment of the link struts 10.5 to the front tube 10.1 is at some distance from the pivoting axis 10.4, so that movement of the link rods 10.5 causes the front tube 10.1 to pivot about its pivot axis 10.4. Similarly, the pivot attachment of the link rods 10.5 to the telescopic member 12.2 is at some distance from the pivot attachment of the telescopic member 12.2 with the main frame 10, so that a pivoting movement of the telescopic member 12.2 causes the above-mentioned pivoting movement of the front tube 10.1.

In the raised configuration or position illustrated in [Fig.1], the subframe 12.1 of the saddle support assembly 12 is in an extended position relative to the telescopic member 12.2, and the connecting rod 12.3 is in a mainly raised or upright position, having for consequence that the saddle 14 attached to a rear end of the subframe 12.1 is in a raised position.

In the lowered configuration or position illustrated in [Fig.2], the subframe 12.1 of the saddle support assembly 12 is in a compressed or engaged position relative to the telescopic member 12.2, whereby the telescopic member 12.2 is totally or nearly totally engaged in the subframe 12.1. Also, the connecting rod 12.3 is in inclined position, having for consequence that the subframe 12.1 is inclined downwardly and forwardly. The saddle 14 at the rear end of the subframe 12.1 is thereby in a lowered position.

As this is apparent, the above passage from the raised position to the lowered position, and vice versa, not only changes the position, essentially the height but not only, and orientation of the saddle 14, but also the orientation of the front tube 10.1 and the position of the spring strut with shock absorber 18. Indeed, when passing from the raised to the lowered position, the subframe 12.1 by sliding relative to the telescopic member 12.2 not only moves forward but pivots at unison with the telescopic member 12.2 about the pivot attachment of the telescopic member 12.2 at the front portion of the main frame 10. This pivoting movement causes the front tube 10.1 to pivot about its pivoting axis 10.4 by virtue of the link rods 10.5 mechanically linking said front tube 10.1 to the telescopic member 12.2. For instance, that movement causes a pivoting movement of the front tube 10.1 resulting in an increase of the caster angle of the steering column 16. Further, when passing from the raised to the lowered position, the subframe 12.1 by sliding relative to the telescopic member 12.2 moves the rod 12.3 causing tilting thereof in a forward direction relative to the main frame 10. This tilting or pivoting movement causes the lowering of the subframe 12.1 but also moves in a forward direction the pivoting attachment of the spring strut with shock absorber 18 to the bicycle frame 4, and thereby causes a lowering of the bicycle 4 relative to the ground, at the rear wheel 8. This combined lowering of the rear wheel 8 with increase of the caster angle of the steering column is particularly advantageous for downhill rides.

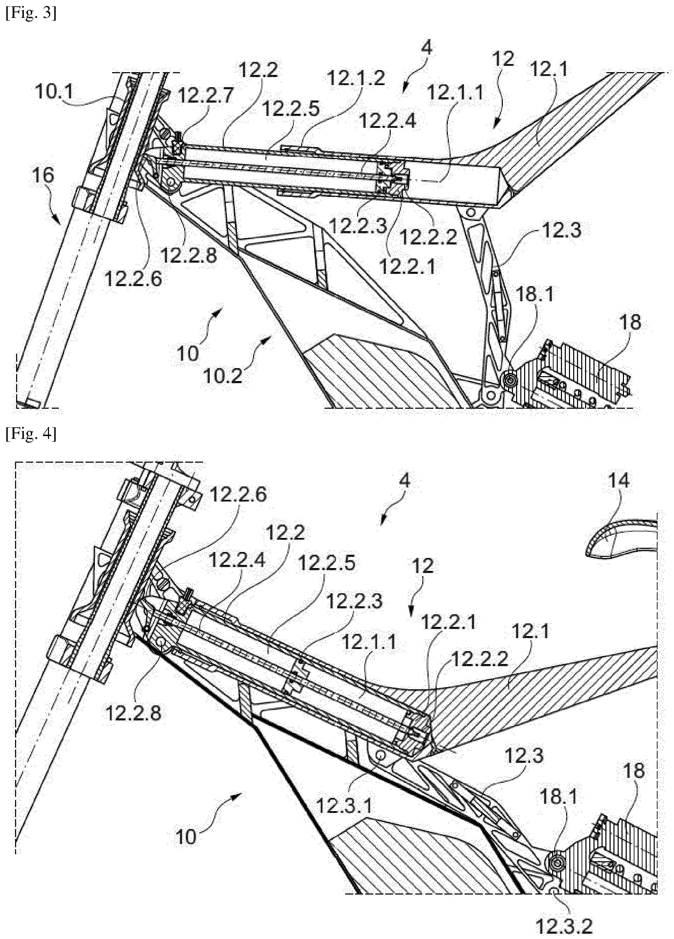

Figures 3 and 4 are sectionals view of the frame of the bicycle of figures 1 and 2, where the saddle is the raised position and in the lowered position, respectively.

With reference to [Fig.3], the subframe 12.1 of the saddle support assembly 12 forms a bore receiving the telescopic member 12.2 and delimiting with said telescopic member 12.2 an oil chamber 12.1.1 filled with oil. The subframe 12.1 can comprise sealing means, like a gasket 12.1.2 in the bore at the vicinity of the opening of the bore, said sealing means contacting an outer surface of the telescopic member 12.2 so as to form a liquid light barrier. The telescopic member 12.2 is generally cylindrical so as to tightly fit into the bore of the subframe 12.1. The telescopic member 12.2 comprises a piston 12.2.1 attached at an end thereof located in the bore, said piston delimiting with the bore the oil chamber 12.1.1. A valve 12.2.2 is provided in the piston 12.2.1, so as to selectively allow liquid to escape out of the oil chamber 12.1.1. A command rod 12.2.4 extends longitudinally through the telescopic member 12.2, from the valve 12.2.2 to a front end of the telescopic member 12.2. In particular, the command rod 12.2.4 is configured so as to have a front end that can be actuated for selectively opening the valve 12.2.2. The telescopic member 12.2 forms a gas chamber 12.2.5 that is delimited by a freely slidable piston 12.2.3 that separates the oil of the oil chamber 12.1.1 from the gas of the gas chamber 12.2.5. In the present case, the freely slidable piston 12.2.3 is crossed by the command rod 12.2.4, meaning that the freely slidable piston 12.2.3 forms a gas and liquid tight barrier with the inner cylindrical wall of the telescopic member 12.2 and also with the outer surface of the command rod 12.2.4.

For being operable, the command rod 12.2.4 extends out of the gas chamber 12.2.5 in a gas tight manner, close to the front tube 10.1. A pivoting lever 12.2.6 is pivotally mounted on the telescopic member 12.2 and contacts a distal end of the command rod 12.2.4, so that upon traction or pressure on said pivoting lever 12.2.6, the latter pushes the command rod 12.2.4 axially towards the piston 12.2.1 and opens the valve 12.2.2. The opening of the valve 12.2.2 allows the oil to flow out of the oil chamber 12.1.1, through the piston 12.2.1 towards the freely slidable piston 12.2.3 which then accordingly moves axially relative to the piston 12.2.1. That movement reduces the size of the gas chamber 12.2.5 and thereby compresses the gas located in said gas chamber 12.2.5. The pressure in the gas chamber 12.2.5 can be adjusted by means of the gas valve 12.2.7 fluidly connected between the gas chamber 12.2.4 and the ambient. That gas valve 12.2.7 can be of a Schrader type, for instance a manually operable check valve with an external connector for a gas filling device like a pump.

In the raised position of [Fig.3], the pivoting lever 12.2.6 is not operated, meaning that the command rod 12.2.4 is not actuated and the valve 12.2.2 remains closed. The ride of the bicycle sitting on the saddle (not visible) attached to a rear end of the subframe 12.1 exerts on the subframe 12.1 a downward force resulting by virtue of the connecting rod 12.3 in a compressive force on the oil in the oil chamber 12.1.1, tending to move the subframe 12.1 towards the telescopic member 12.2. The fact that the valve 12.2.2 is closed prevents any flow of the oil out of the oil chamber 12.1.1, meaning that the subframe 12.1 does not move relative to the telescopic member 12.2. Due to this absence of mutually engaging movement between the telescopic member 12.2 and the subframe 12.1, the connecting rod 12.3 does not move and the subframe 12.1 does not pivot about the pivoting attachment or linkage 12.2.8 of the telescopic member 12.2 at the front end of the main frame 10.

For reaching the lowered position illustrated in [Fig.4], the command rod 12.2.4 is actuated, for example via the pivoting lever 12.2.6, so as to open the valve 12.2.2 in the piston 12.2.1. The oil located in the oil chamber 12.1.1 ([Fig.1]) can then flow through the piston 12.2.1 via the opened valve 12.2.2 to the freely slidable piston 12.3.3 which then progressively slides away from the piston 12.2.1, against the resilient force of the compressed gas in the gas chamber 12.2.5. The movement of the freely slidably piston 12.2.3 is determined by the volume of oil that passes through the piston. Also, the resilient force exerted on the side of the freely slidable piston 12.2.3 opposed to the oil, by the compressed gas in the gas chamber 12.2.5, progressively increases as the freely slidable piston 12.2.3 is pushed by the oil flowing through the piston 12.2.1 and the valve 12.2.2, due to the size reduction of the gas chamber 12.2.5. The lowering movement of the subframe 12.1 is generated by a downward force exerted on the saddle 14 by the rider, for instance by a controlled movement of the rider partly sitting on the saddle 14. As the subframe moves downwardly, it progressively pivots about the pivoting attachment or linkage 12.2.8 of the telescopic member 12.2 at the front end of the main frame 10, and moves forwardly by progressively further engaging with the telescopic member 12.2. During that movement, the connecting rod 12.3 pivots or tilts forwardly, resulting in an increasing force ratio between the compressive force in the oil chamber 12.1.1 and the downward force exerted on the saddle 14 by the rider. That increasing force ratio is compensated by the progressively increasing reacting force by the compressed gas in the gas chamber 12.2.5.

Once the lowered position as illustrated in [Fig.4] is reached, the command rod is released so as to close the valve 12.2.2, thereby preventing an unwanted raising movement of the subframe 12.1. It is also to be understood that this applies also to any intermediate position.

For moving the subframe 12.1 from the lowered position as in [Fig.4] back to the raised position as in [Fig.3], the command rod 12.2.4 is actuated so as to open the valve 12.2.2. The resilient force exerted by the compressed gas in the gas chamber 12.2.5 moves the oil located between the freely slidably piston 12.2.3 and the piston 12.2.1 through said piston back to the oil chamber 12.1.1 at the right side of said piston 12.2.1. That oil flow moves the subframe 12.1 relative the telescopic member 12.2 in an extension direction, causing raising of said subframe 12.1.

As this is apparent in [Fig.4], the pivoting axes 12.2.8, 12.3.1 and 12.3.2 of the telescopic member 12.2 on the main frame 10 and of the connecting rod 12.3 on the subframe 12.1 and on the main frame 10, respectively, are not aligned, so as to allow a raising movement of the subframe 12.1 when a sufficient force is exerted on the oil as explained here above. More specifically, the pivot axis 12.3.1 of the connecting rod 12.3 on the subframe 12.1 is above a line passing by the pivot axes 12.2.8 and 12.3.2 of the telescopic member 12.2 and the connecting rod 12.3 on the main frame 10, thereby allowing the above described raising movement.

As this is also apparent in figures 3 and 4, the spring strut with shock absorber 18 is attached to the connecting rod 12.3 via a front pivot axis 18.1 that is distant from the pivot axis 12.3.2 of the connecting rod 12.3 on the main frame 10, so that a pivoting movement of the connecting rod 12.3 about the pivot axis 12.3.2 moves the front pivot axis 18.1 of the spring strut with shock absorber 18 along a circular arc centred on the pivot axis 12.3.2 and resulting in a displacement of the front pivot axis 18.1 generally along a longitudinal axis of the spring strut with shock absorber 18. This displacement is oriented forwardly when the saddle 14 is moved to the lowered position, resulting in a movement of the swing arm relative to the main frame 10 causing a lowering of rear part of the main frame 10. When the saddle 14 is moved to the raised position, the front pivot axis 18.1 is moved rearwardly, causing a reverse movement of the swing arm relative to the main frame 10 causing a raising of the main frame 10 back to its initial height.

The above-described construction of the command rod 12.2.4, for instance as extending through the gas chamber 12.2.5 and out of the said chamber, is a preferred embodiment, being understood that many variations are possible. Any alternative means able to actuate the valve 12.2.2 can be considered. These means can also comprise an electric actuator of the valve. For example, the subframe 12.1 and the telescopic member 12.2 can be mechanically linked to each other via a ball screw drive driven by an electric motor, i.e. in the absence of oil and gas as in the above embodiment.

[Fig.5] is a perspective view of the upper and front portion of the bicycle of figures 1 and 2, showing the link rods between the front tube and the telescopic member.

The link rods 10.5 are for instance two plates, similar to link plates of a drive chain. Each of the front tube 10.1 and the telescopic member 12.2 comprises a massive protrusion with two opposed lateral faces against which the link plates are located. Each of these two massive protrusions and the two link plates are crossed by a pin forming a pivot axis. As this is apparent, the lower of these two axes is distinct and distant from the pivoting axis 12.2.8 of the telescopic member 12.2 on the main frame 10. Similarly, the upper of these two axes is distinct and distant from the pivot axis 10.4 of the front tube 10.1 relative to the main frame 10.

Figures 6 and 7 are two lateral complete views of the bicycle of figures 1 to 5, in the raised and lowered positions, respectively.

We can observe the combined lowering action of a rear part of the main frame 10 and increasing of the caster angle of the steering column 16, when moving the subframe 12.1 supporting the saddle (not represented) from the raised position, illustrated in [Fig.6], to the lowered position, illustrated in [Fig.7].

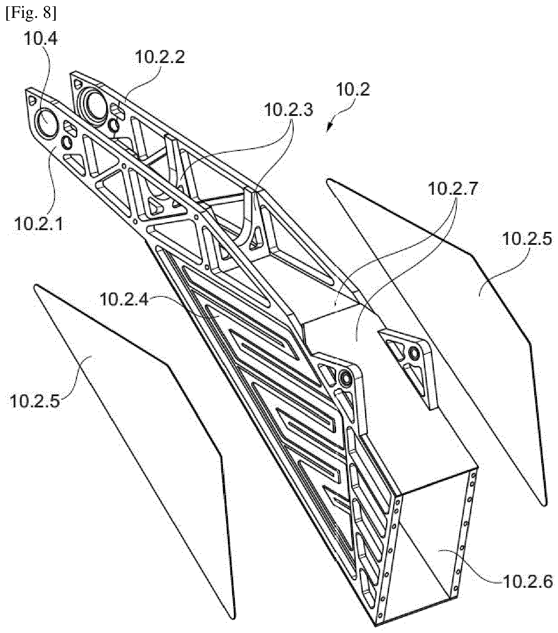

[Fig.8] is a detailed view of the beam 10.2 that forms the main frame 10. We can see the two longitudinal symmetric plates 10.2.1 and 10.2.2 assembled to each other by the transversal spacers 10.2.3, as already briefly mentioned in connection with [Fig.1]. Each of these two longitudinal symmetric plates 10.2.1 and 10.2.2 can be unitary, i.e. made of a single plate that is cut and/or machined, e.g. of aluminium or any other metallic material. Also, the recessed areas 10.2.4 form meanders, formed by removing material, e.g. by machining, that form one or more fluid channels when covered by the corresponding cover plate 10.2.5. These fluid channels can be used for circulating a cooling fluid of the drive electric motor mentioned above. They are particularly advantageous by their direct integration in the main frame 10 of the bicycle and their robustness, contrary to more classical honeycomb heat exchanges used in motor vehicles.

In [Fig.8], we can also see the essentially cuboid volume 10.2.6 formed between the two longitudinal symmetric plates 10.2.1 and 10.2.2, designed for receiving batteries of the drive electric motor mentioned here above. This volume can be closed by the plates 10.2.7 which can be made of non-metallic material, like composite material. This essentially closed volume is also insulated from cold air, e.g. in winter conditions, by the two recessed areas 10.2.4 and corresponding cover plates 10.2.5. In winter conditions, the capacity of the batteries can be substantially lowered when subject to lower temperatures. The above volume provides an efficient insulation of the batteries. In summer conditions and absence of appropriate cooling, the drive electric motor can overheat, whereas the above integrated coolers provide an efficient way of avoiding the overheating.

## Claims

1. A bicycle frame (4) comprising:
a main frame (10) comprising:
a front tube (10.1) for bearing a steering column (16); and
a rear end for bearing a swing arm;
a saddle support assembly (12) pivotally mounted to the main frame (10) so as to allow adjusting the saddle (14);
**characterized in that**
the saddle support assembly (12) comprises:
a subframe (12.1);
a telescopic member (12.2) received in and extending from a bore at a front end of the subframe (12.1) and pivotally linked to a front portion of the main frame (10); and
a connecting rod (12.3) pivotally linked to the subframe (12.1) and to a rear portion of the main frame (10).

2. The bicycle frame (4) according to claim 1, wherein the saddle support assembly (12) is movable between a raised position where the telescopic member (12.2) is an extended position and the connecting rod (12.3) is in an upright position, and a lowered position where the telescopic member (12.2) is in a retracted position and the connecting rod (12.3) is in an inclined position.

3. The bicycle frame (4) according to claim 2, wherein the connecting rod (12.3) in the raised position is vertical or inclined by not more than 20° relative to the vertical.

4. The bicycle frame (4) according to one of claims 2 and 3, wherein the telescopic member (12.2) and the subframe (12.1) delimit an oil chamber (12.1.1), said oil chamber (12.1.1) having a volume that is reduced in the lowered position and increased in the raised position, preferably wherein the telescopic member (12.2) comprises a piston (12.2.1) slidingly received in a cylindrical cavity formed in the subframe (12.1), said piston (12.2.1) and said cylindrical cavity delimiting the oil chamber (12.1.1).

5. The bicycle frame (4) according to claim 4, wherein the telescopic member (12.2) comprises an inner volume delimiting a gas chamber (12.2.5), said gas chamber (12.2.5) comprising a freely sliding piston (12.2.3) separating the gas chamber (12.2.5) and the oil chamber (12.1.1).

6. The bicycle frame (4) according to one of claims 4 and 5, wherein the telescopic member (12.2) comprises a command rod (12.2.4) extending longitudinally through the gas chamber (12.2.5), through the freely sliding piston (12.2.3) until the piston (12.2.1) and engaged with a valve (12.2.2) on said piston (12.2.1).

7. The bicycle frame (4) according to any one of claims 1 to 3, wherein the subframe (12.1) and the telescopic member (12.2) are mechanically linked to each other via ball screw drive driven by an electric motor.

8. The bicycle frame (4) according to any one of claims 1 to 7, wherein the connecting rod (12.3) is pivotally linked to the subframe (12.1) at an intermediate portion between the front end and a rear end of said subframe.

9. The bicycle frame (4) according to any one of claims 1 to 8, wherein the subframe has a lateral profile that is V-shaped.

10. The bicycle frame (4) according to claims 8 and 9, wherein the intermediate portion is adjacent an angular portion of the V-shaped profile.

11. The bicycle frame (4) according to any one of claims 1 to 10, wherein the connecting rod (12.3) comprises, adjacent the pivoting linkage to the rear portion of the main frame (10) a pivoting linkage to a spring strut with shock absorber (18) of the swing arm, so that adjusting the saddle (14) adjusts also the swing arm relative to the main frame (10).

12. The bicycle frame (4) according to any one of claims 1 to 11, wherein the front tube (10.1) is pivotally mounted on the main frame (10) and mechanically linked to the telescopic member (12.2) so that adjusting the saddle (14) adjusts also the angle of the steering column (16) relative to the main frame (10).

13. The bicycle frame (4) according to any one of claims 1 to 12, wherein the main frame (10) comprises a beam (10.2) to which the front tube (10.1) is attached and comprising two spaced longitudinal symmetric plates (10.2.1, 10.2.2) assembled to each other by transversal spacers (10.2.3).

14. The bicycle frame (4) according to claim 13, wherein at least one of the two spaced longitudinal symmetric plates (10.2.1, 10.2.2) comprises a recessed areas (10.2.4) with meanders and covered by a cover plate (10.2.5) so as to form a cooling fluid channel through the meanders.

15. The bicycle frame (4) according to claim 14, wherein the two spaced longitudinally symmetric plates (10.2.1, 10.2.2) form a volume (10.2.6) between the recesses area(s) (10.2.4), said volume being closed by one or more plates (10.2.7) preferably being non-metallic.

## Patentansprüche

1. Ein Fahrradrahmen (4) umfassend:
einen Hauptrahmen (10) umfassend:
ein vorderes Rohr (10.1) zum Tragen einer Lenksäule (16); und
ein hinteres Ende zum Tragen eines Schwingarms;
eine Sattelstützenanordnung (12), die schwenkbar am Hauptrahmen (10) montiert ist, um das Einstellen des Sattels (14) zu ermöglichen;
**dadurch gekennzeichnet, dass**
die Sattelstützenanordnung (12) umfasst:
einen Unterrahmen (12.1);
ein Teleskopglied (12.2), das in eine Bohrung am vorderen Ende des Unterrahmens (12.1) aufgenommen wird und sich von dort aus erstreckt, und das schwenkbar mit einem vorderen Teil des Hauptrahmens (10) verbunden ist; und
eine Verbindungsstange (12.3), die schwenkbar mit dem Unterrahmen (12.1) und einem hinteren Teil des Hauptrahmens (10) verbunden ist.

2. Der Fahrradrahmen (4) nach Anspruch 1, wobei die Sattelstützenanordnung (12) zwischen einer angehobenen Position, in der das Teleskopglied (12.2) in einer ausgefahrenen Position und die Verbindungsstange (12.3) in einer aufrechten Position ist, und einer abgesenkten Position, in der das Teleskopglied (12.2) in einer eingefahrenen Position und die Verbindungsstange (12.3) in einer geneigten Position ist, beweglich ist.

3. Der Fahrradrahmen (4) nach Anspruch 2, wobei die Verbindungsstange (12.3) in der angehobenen Position vertikal oder um nicht mehr als 20° relativ zur Vertikalen geneigt ist.

4. Der Fahrradrahmen (4) nach einem der Ansprüche 2 und 3, wobei das Teleskopglied (12.2) und der Unterrahmen (12.1) eine Ölkammer (12.1.1) begrenzen, wobei das Volumen der Ölkammer (12.1.1) in der abgesenkten Position reduziert und in der angehobenen Position vergrößert ist, vorzugsweise wobei das Teleskopglied (12.2) einen Kolben (12.2.1) umfasst, der gleitend in einer zylindrischen Höhlung im Unterrahmen (12.1) aufgenommen ist, wobei der Kolben (12.2.1) und die zylindrische Höhlung die Ölkammer (12.1.1) begrenzen.

5. Der Fahrradrahmen (4) nach Anspruch 4, wobei das Teleskopglied (12.2) ein inneres Volumen umfasst, das eine Gaskammer (12.2.5) begrenzt, wobei die Gaskammer (12.2.5) einen frei gleitenden Kolben (12.2.3) umfasst, der die Gaskammer (12.2.5) und die Ölkammer (12.1.1) trennt.

6. Der Fahrradrahmen (4) nach einem der Ansprüche 4 und 5, wobei das Teleskopglied (12.2) eine Steuerstange (12.2.4) umfasst, die sich längs durch die Gaskammer (12.2.5), durch den frei gleitenden Kolben (12.2.3) bis zum Kolben (12.2.1) erstreckt und mit einem Ventil (12.2.2) an dem Kolben (12.2.1) verbunden ist.

7. Der Fahrradrahmen (4) nach einem der Ansprüche 1 bis 3, wobei der Unterrahmen (12.1) und das Teleskopglied (12.2) mechanisch über einen Kugelgewindetrieb verbunden sind, der von einem Elektromotor angetrieben wird.

8. Der Fahrradrahmen (4) nach einem der Ansprüche 1 bis 7, wobei die Verbindungsstange (12.3) schwenkbar mit dem Unterrahmen (12.1) an einem Zwischenabschnitt zwischen dem vorderen Ende und einem hinteren Ende des Unterrahmens verbunden ist.

9. Der Fahrradrahmen (4) nach einem der Ansprüche 1 bis 8, wobei der Unterrahmen ein seitliches Profil hat, das V-förmig ist.

10. Der Fahrradrahmen (4) nach den Ansprüchen 8 und 9, wobei der Zwischenabschnitt an einem Winkelabschnitt des V-förmigen Profils angrenzt.

11. Der Fahrradrahmen (4) nach einem der Ansprüche 1 bis 10, wobei die Verbindungsstange (12.3) neben der schwenkbaren Verbindung zum hinteren Teil des Hauptrahmens (10) eine schwenkbare Verbindung zu einer Federstrebe mit Stoßdämpfer (18) des Schwingarms umfasst, sodass das Einstellen des Sattels (14) auch den Schwingarm relativ zum Hauptrahmen (10) einstellt.

12. Der Fahrradrahmen (4) nach einem der Ansprüche 1 bis 11, wobei das vordere Rohr (10.1) schwenkbar am Hauptrahmen (10) montiert und mechanisch mit dem Teleskopglied (12.2) verbunden ist, sodass das Einstellen des Sattels (14) auch den Winkel der Lenksäule (16) relativ zum Hauptrahmen (10) einstellt.

13. Der Fahrradrahmen (4) nach einem der Ansprüche 1 bis 12, wobei der Hauptrahmen (10) einen Balken (10.2) umfasst, an dem das vordere Rohr (10.1) befestigt ist und zwei beabstandete, längssymmetrische Platten (10.2.1, 10.2.2) umfasst, die durch Querspacer (10.2.3) miteinander verbunden sind.

14. Der Fahrradrahmen (4) nach Anspruch 13, wobei mindestens eine der zwei beabstandeten, längssymmetrischen Platten (10.2.1, 10.2.2) eine vertiefte Fläche (10.2.4) mit Mäandern umfasst und von einer Abdeckplatte (10.2.5) bedeckt ist, sodass ein Kühlflüssigkeitskanal durch die Mäander gebildet wird.

15. Der Fahrradrahmen (4) nach Anspruch 14, wobei die zwei beabstandeten, längssymmetrischen Platten (10.2.1, 10.2.2) ein Volumen (10.2.6) zwischen den vertieften Flächen (10.2.4) bilden, wobei dieses Volumen durch eine oder mehrere vorzugsweise nichtmetallische Platten (10.2.7) geschlossen wird.

## Revendications

1. Un cadre de bicyclette (4) comprenant :
un cadre principal (10) comprenant :
un tube avant (10.1) pour supporter une colonne de direction (16) ; et
une extrémité arrière pour supporter un bras oscillant ;
un ensemble de support de selle (12) monté pivotant sur le cadre principal (10) afin de permettre le réglage de la selle (14) ;
**caractérisé en ce que**
l'ensemble de support de selle (12) comprend :
un sous-cadre (12.1) ;
un élément télescopique (12.2) reçu dans et s'étendant à partir d'un alésage à une extrémité avant du sous-cadre (12.1) et relié pivotant à une partie avant du cadre principal (10) ; et
une bielle (12.3) reliée pivotant au sous-cadre (12.1) et à une partie arrière du cadre principal (10).

2. Le cadre de bicyclette (4) selon la revendication 1, dans lequel l'ensemble de support de selle (12) est mobile entre une position élevée où l'élément télescopique (12.2) est en position étendue et la bielle (12.3) est en position verticale, et une position abaissée où l'élément télescopique (12.2) est en position rétractée et la bielle (12.3) est en position inclinée.

3. Le cadre de bicyclette (4) selon la revendication 2, dans lequel la bielle (12.3) en position élevée est verticale ou inclinée de pas plus de 20° par rapport à la verticale.

4. Le cadre de bicyclette (4) selon l'une des revendications 2 et 3, dans lequel l'élément télescopique (12.2) et le sous-cadre (12.1) délimitent une chambre d'huile (12.1.1), ladite chambre d'huile (12.1.1) ayant un volume réduit en position abaissée et augmenté en position élevée, de préférence dans lequel l'élément télescopique (12.2) comprend un piston (12.2.1) reçu coulissant dans une cavité cylindrique formée dans le sous-cadre (12.1), ledit piston (12.2.1) et ladite cavité cylindrique délimitant la chambre d'huile (12.1.1).

5. Le cadre de bicyclette (4) selon la revendication 4, dans lequel l'élément télescopique (12.2) comprend un volume intérieur délimitant une chambre à gaz (12.2.5), ladite chambre à gaz (12.2.5) comprenant un piston librement coulissant (12.2.3) séparant la chambre à gaz (12.2.5) et la chambre d'huile (12.1.1).

6. Le cadre de bicyclette (4) selon l'une des revendications 4 et 5, dans lequel l'élément télescopique (12.2) comprend une tige de commande (12.2.4) s'étendant longitudinalement à travers la chambre à gaz (12.2.5), à travers le piston librement coulissant (12.2.3) jusqu'au piston (12.2.1) et engagée avec une valve (12.2.2) sur ledit piston (12.2.1).

7. Le cadre de bicyclette (4) selon l'une des revendications 1 à 3, dans lequel le sous-cadre (12.1) et l'élément télescopique (12.2) sont mécaniquement reliés l'un à l'autre via une transmission à vis à billes entraînée par un moteur électrique.

8. Le cadre de bicyclette (4) selon l'une des revendications 1 à 7, dans lequel la bielle (12.3) est reliée pivotant au sous-cadre (12.1) à une partie intermédiaire entre l'extrémité avant et une extrémité arrière dudit sous-cadre.

9. Le cadre de bicyclette (4) selon l'une des revendications 1 à 8, dans lequel le sous-cadre a un profil latéral en forme de V.

10. Le cadre de bicyclette (4) selon les revendications 8 et 9, dans lequel la partie intermédiaire est adjacente à une partie angulaire du profil en forme de V.

11. Le cadre de bicyclette (4) selon l'une quelconque des revendications 1 à 10, dans lequel la bielle (12.3) comprend, adjacente à la liaison pivotante à la partie arrière du cadre principal (10), une liaison pivotante à un support de ressort avec amortisseur (18) du bras oscillant, de sorte que le réglage de la selle (14) ajuste également le bras oscillant par rapport au cadre principal (10).

12. Le cadre de bicyclette (4) selon l'une quelconque des revendications 1 à 11, dans lequel le tube avant (10.1) est monté pivotant sur le cadre principal (10) et relié mécaniquement à l'élément télescopique (12.2) de sorte que le réglage de la selle (14) ajuste également l'angle de la colonne de direction (16) par rapport au cadre principal (10).

13. Le cadre de bicyclette (4) selon l'une quelconque des revendications 1 à 12, dans lequel le cadre principal (10) comprend une poutre (10.2) à laquelle le tube avant (10.1) est attaché et comprenant deux plaques longitudinales symétriques espacées (10.2.1, 10.2.2) assemblées entre elles par des entretoises transversales (10.2.3).

14. Le cadre de bicyclette (4) selon la revendication 13, dans lequel au moins une des deux plaques longitudinales symétriques espacées (10.2.1, 10.2.2) comprend une ou des zones en retrait (10.2.4) avec des méandres et couvertes par une plaque de recouvrement (10.2.5) de manière à former un canal de fluide de refroidissement à travers les méandres.

15. Le cadre de bicyclette (4) selon la revendication 14, dans lequel les deux plaques longitudinales symétriques espacées (10.2.1, 10.2.2) forment un volume (10.2.6) entre la ou les zones en retrait (10.2.4), ledit volume étant fermé par une ou plusieurs plaques (10.2.7) de préférence non métalliques.
